Europäisches Patentamt

European Patent Office

Office européen des brevets

(19)

(11) Veröffentlichungsnummer: **0 179 014**
**B1**

(12) **EUROPÄISCHE PATENTSCHRIFT**

(45) Veröffentlichungstag der Patentschrift:
25.01.89

(51) Int. Cl.⁴: **C 21 B 13/14,** C 21 B 11/00

(21) Anmeldenummer: 85730111.3

(22) Anmeldetag: 19.08.85

(54) Verfahren zur Herstellung von Roheisen.

(30) Priorität: 17.10.84 DE 3438487

(43) Veröffentlichungstag der Anmeldung:
23.04.86 Patentblatt 86/17

(45) Bekanntmachung des Hinweises auf die Patenterteilung:
25.01.89 Patentblatt 89/4

(84) Benannte Vertragsstaaten:
BE FR GB IT LU NL SE

(56) Entgegenhaltungen:
EP-A-0 094 707
WO-A-81/01715
DE-A-1 508 082
DE-A-3 345 106
FR-A-1 494 623
FR-A-2 215 478
US-A-3 993 473

PATENTS ABSTRACTS OF JAPAN, Band 6, Nr. 169
(C-122) 1047 , 2. September 1982; & JP-A-57 85 911
(ISHIKAWAJIMA HARIMA JUKOGYO K.K.) 28-05-1982

(73) Patentinhaber: DEUTSCHE VOEST- ALPINE
INDUSTRIEANLAGENBAU GMBH, Neusser
Strasse 111, D-4000 Düsseldorf 1 (DE)

(72) Erfinder: Hauk, Rolf, Dr., Ratkellerstrasse 12,
D-7590 Achern (DE)

(74) Vertreter: Pfenning, Meinig & Partner,
Mozartstrasse 17, D-8000 München 2 (DE)

## Beschreibung

Die Erfindung betrifft ein Verfahren zur Herstellung von Roheisen, bei dem Eisenerz in einem Reduktionsschachtofen reduziert und der hierdurch erhaltene Eisenschwamm anschließend in einem Einschmelzvergaser aufgeschmolzen werden, wobei in dem Einschmelzvergaser ein Kohlenstoffträger und ein reduzierendes Gas eingeführt und das im Einschmelzvergaser erzeugte Gas als Reduktionsgas in dem Reduktionsschachtofen geleitet werden.

Aus der DE-PS 2 843 303 ist ein Verfahren zur Erzeugung von flüssigem Roheisen und Reduktionsgas in einem Einschmelzvergaser, in dem Eisenschwammpartikel zu flüssigem Roheisen oder Stahlvormaterial eingeschmolzen werden und aus zugeführter Kohle und oberhalb der Schmelze eingeblasenem sauerstoffhaltigen Gas die zum Schmelzen erforderliche Wärme und Reduktionsgas erzeugt werden, bekannt. Bei diesem Verfahren fällt relativ viel Überschußgas (Exportgas) an und der Energieverbrauch, das heißt der Verbrauch von Kohle und Sauerstoff liegt sehr hoch. Falls das Überschußgas nicht wirtschaftlich verwendet werden kann, liegen die Erzeugungskosten für das Roheisen sehr hoch. Die chemische Energie im Überschußgas beträgt mehr als 50 % der mit der Kohle zugeführten Energie und die Ausnutzung des im Einschmelzvergaser erzeugten Reduktionsgases liegt bei maximal 44 %.

Aus der US-PS 4 225 340 ist es bekannt, das Gichtgas eines Reduktionsschachtofens weitgehend von Kohlendioxid zu befreien und das so aufbereitete Gichtgas für die Erzeugung frischen Reduktionsgases zu verwenden. Dieses wird dem Ausgangsgas eines fossile Brennstoffe verarbeitenden Vergasers, einem hinter den Vergaser geschalteten Gasreaktor und weiterhin dem Ausgangsgas des Gasreaktors direkt sowie über einen Gaserhitzer zugeführt. Das Ausgangsgas des Gasreaktors mit dem zugemischten aufbereiteten Gichtgas wird als Reduktionsgas in den Reduktionsschachtofen geleitet. Dieses bekannte Verfahren dient jedoch nur zur Erzeugung von Eisenschwamm ohne Verwendung eines Einschmelzvergasers.

Ein ähnliches Verfahren zur Eisenschwammerzeugung ist aus der US-PS 4 260 412 bekannt. Bei diesem wird ebenfalls durch Kohlendioxidentfernung aufbereitetes Gichtgas eines Reduktionsschachtofens zur Herstellung des frischen Reduktionsgases verwendet. Als Gaserzeuger dient ein Flüssigbett-Vergaser, dem das aufbereitete Gichtgas, Kohle und Kalk sowie Sauerstoff und gegebenenfalls Wasserdampf zugeführt werden.

Dem Ausgangsgas dieses Vergasers wird das aufbereitete Gichtgas direkt sowie über einen Gaserhitzer zugemischt, bevor es in den Reduktionsschachtofen geführt wird. Auch dieses Verfahren arbeitet somit ohne Einschmelzvergaser zur Herstellung von Roheisen.

Es ist daher die Aufgabe der vorliegenden Erfindung, ein Verfahren der anfangs genannten Art anzugeben, bei dem der Verbrauch von Kohle und Sauerstoff wesentlich herabgesetzt ist.

Diese Aufgabe wird erfindungsgemäß dadurch gelöst, daß das Gichtgas des Reduktionsschachtofens von den oxidierten Bestandteilen $CO_2$ und $H_2O$ zumindest teilweise befreit und das so aufbereitete Gichtgas in den Einschmelzvergaser geführt wird. Gemäß einer vorteilhaften Ausbildung dieses Verfahrens wird das aufbereitete Gichtgas weiterhin dem im Einschmelzvergaser erzeugten und in dem Reduktionsschachtofen geleiteten Gas als Kühlgas zugegeben. Es sollen vorzugsweise insgesamt 50 bis 95 %, vorzugsweise 85 % des Gichtgases zur Reduktionsgaserzeugung rückgeführt werden. Weiterhin soll nur so-viel Überschußgas (Exportgas) erzeugt werden, daß damit die Verdichter der $O_2$-Anlage betrieben und/oder Dampf für die $CO_2$-Wäsche hergestellt werden können.

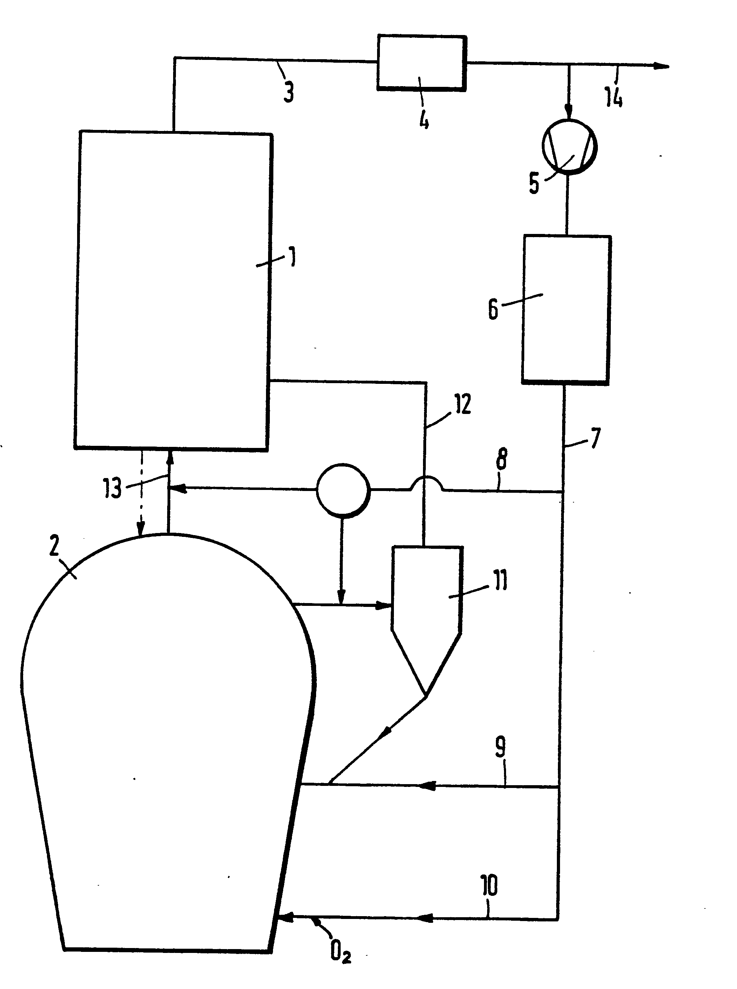

Die Erfindung wird im folgenden anhand eines in der Figur dargestellten Ausführungsbeispiels näher erläutert. Die Figur zeigt in schematischer Darstellung eine Anlage zur Herstellung von Roheisen.

Die Anlage enthält einen in bekannter Weise ausgebildeten Reduktionsschachtofen 1, dem von oben über einen nicht gezeigten Einlaß Eisenerz und gegebenenfalls Zuschlagstoffe zugeführt werden. Dem Reduktionsschachtofen 1 wird von unten her aus einem Einschmelzvergaser 2 Reduktionsgas zugeleitet. Der Einschmelzvergaser 2 wiederum nimmt den durch die Reduktion des Eisenerzes erzeugten Eisenschwamm auf und bildet aus diesem eine Roheisenschmelze. Hierzu werden dem Einschmelzvergaser 2 Kohle und Sauerstoff zugeführt. Als Kohle können minderwertiger Koks oder Braunkohlenhochtemperaturkoks verwendet werden.

Das Gichtgas des Reduktionsschachtofens wird über eine Leitung 3 in einen Wäscher 4 gebracht und dann zum größten Teil, das heißt zu etwa 50 bis 95 %, vorzugsweise 85 %, über einen Kompressor 5 einem $CO_2$-Wäscher 6 zugeführt. Das aus diesem austretende, von $CO_2$ und $H_2O$ befreite Gas gelangt zunächst in eine Leitung 7 und aus dieser in drei Zweigleitungen 8, 9 und 10. Das über die Zweigleitung 8 abgeführte aufbereitete Gichtgas des Reduktionsschachtofens wird als Kühlgas für das aus dem Einschmelzvergaser 2 austretende Gas verwendet. Es bewirkt eine Kühlung dieses Gases von etwa 1000° o C auf etwa 850° C. In der Zweigleitung 9 dient das aufbereitete Gichtgas als Fördergas für den in einem Zyklon 11 auf dem im Einschmelzvergaser 2 erzeugten Gas abgeschiedenen und wieder in den Einschmelzvergaser 2 zurückgeführten Staub. Das Reduktionsgas wird zum einen über den Zyklon 11 und eine Leitung 12 und zum anderen direkt über eine Leitung 13 aus dem Einschmelzvergaser 2 in den Reduktionsschachtofen 1 gebracht. Der restliche Teil des aufbereiteten Gichtgases wird über die Zweigleitung 10 der $O_2$-Düsenebene des Einschmelzvergasers 2 zugeführt.

Das aus dem Wäscher 4 austretende Gichtgas wird nur zu einem geringen Teil über eine Leitung 14 als Ausschußgas aus dem beschriebenen Kreislauf herausgenommen. Dieser Teil wird vorzugsweise so gering gehalten, wie zum Ausschleusen des dem Prozeß zugeführten Stickstoffs benötigt wird. Insbesondere bei Verwendung von Kohlen hoher Qualität, zum Beispiel Braunkohlenhochtemperaturkoks oder Anthrazit, kann soviel Gichtgas über den $CO_2$-Wäscher 6 zurückgeführt werden, daß praktisch kein Überschußgas abgegeben wird. Es wird dann nur soviel Überschußgas abgegeben, wie zum Ausschleusen des Stickstoffs benötigt wird. Der Verbrauch von Kohle und Sauerstoff kann hierbei gegenüber dem herkömmlichen Verfahren ohne Rückführung des Gichtgases angenähert halbiert werden. Wird Kohle niedriger Qualität, das heißt Kohle mit einem hohen Gehalt an Asche und flüchtigen Bestandteilen, verwendet, dann empfiehlt es sich, das aufbereitete und rückgeführte Gichtgas mit einem Plasmabrenner aufzuheizen, um günstige Verbrauchswerte zu erreichen.

Das aus dem $CO_2$-Wäscher 6 austretende gereinigte Gichtgas, das aus den Komponenten $H_2$, CO, $N_2$ besteht, kann vor der Einleitung in den Einschmelzvergaser 2 in einem Wärmetauscher vorgewärmt werden. Diese Vorwärmung erfolgt bis zu einer Temperatur im Bereich zwischen 300 und 600° C, vorzugsweise 400° C. Eine Vorwärmung auf höhere Temperaturen ist nicht ratsam, da sonst ein CO-Zerfall stattfindet. Die endgültige Aufwärmung erfolgt dann im Einschmelzvergaser 2.

Wenn im Einschmelzvergaser eine Wirbelschicht ausgebildet wird, ist es auch vorteilhaft, das aufbereitete Gichtgas im Bereich der halben Wirbelschichthöhe in den Einschmelzvergaser einzuleiten.

Es kann sich auch empfehlen, soviel Überschußgas zu erzeugen, daß damit die Verdichter der $O_2$-Anlage betrieben und/oder Dampf für die $CO_2$-Wäsche hergestellt werden können.

## Patentansprüche

1. Verfahren zur Herstellung von Roheisen, bei dem Eisenerz in einem Reduktionsschachtofen reduziert und der hierdurch erhaltene Eisenschwamm anschließend in einem Einschmelzvergaser aufgeschmolzen wird, wobei in den Einschmelzvergaser ein Kohlenstoffträger und ein reduzierendes Gas eingeführt und das im Einschmelzvergaser erzeugte Gas als Reduktionsgas in dem Reduktionsschachtofen geleitet werden, dadurch gekennzeichnet, daß das Gichtgas des Reduktionsschachtofens (1) von den oxidierten Bestandteilen $CO_2$ und $H_2O$ zumindest teilweise befreit und das so aufbereitete Gichtas in den Einschmelzvergaser (2) geführt wird.

2. Verfahren nach Anspruch 1, dadurch gekennzeichnet, daß das aufbereitete Gichtgas weiterhin dem im Einschmelzvergaser (2) erzeugten und in den Reduktionsschachtofen (1) geleiteten Gas als Kühlgas zugegeben wird.

3. Verfahren nach Anspruch 1 und 2, dadurch gekennzeichnet, daß insgesamt 50 bis 95 %, vorzugsweise 85 % des Gichtgases des Reduktionsschachtofens (1) zur Reduktionsgaserzeugung rückgeführt werden.

4. Verfahren nach einem der Ansprüche 1 bis 3, dadurch gekennzeichnet, daß als Kohlenstoffträger minderwertiger Koks oder Braunkohlenhochtemperaturkoks eingesetzt wird.

5. Verfahren nach einem der Ansprüche 1 bis 4, dadurch gekennzeichnet, daß soviel Überschußgas (Exportgas) erzeugt wird, daß damit die Verdichter der $O_2$-Anlage betrieben und/oder Dampf für die $CO_2$-Wäsche hergestellt werden können.

6. Verfahren nach einem der Ansprüche 1 bis 5, dadurch gekennzeichnet, daß das aufbereitete Gichtgas über die $O_2$-Düsenebene in den Einschmelzvergaser (2) eingeführt wird.

7. Verfahren nach einem der Ansprüche 1 bis 5, dadurch gekennzeichnet, daß im Einschmelzvergaser (2) eine Wirbelschicht ausgebildet wird und das aufbereitete Gichtgas im Bereich der halben Wirbelschichthöhe in den Einschmelzvergaser (2) rückgeführt wird.

8. Verfahren nach einem der Ansprüche 1 bis 7, dadurch gekennzeichnet, daß das aufbereitete Gichtgas über Plasmabrenner in den Einschmelzvergaser (2) geführt wird.

9. Verfahren nach einem der Ansprüche 1 bis 8, dadurch gekennzeichnet, daß das aufbereitete Gichtgas vor dem Einführen in den Einschmelzvergaser (2) mittels eines Wärmetauschers auf 300 bis 600° C, vorzugsweise 400° C, vorgewärmt wird.

## Claims

1. Process for making pig iron, wherein iron ore is reduced in a reduction shaft-type furnace and the sponge-iron thereby obtained is then melted in a melt-down gasifier, a carbon carrier and a reducing gas being introduced into the melt-down gasifier and the gas produced in the melt-down gasifier being channelled as reducing gas in the reduction shaft furnace, characterised in that the oxidised components $CO_2$ and $H_2O$ are at least partially liberated from the top gas of the reduction shaft furnace (1) and the top gas prepared in this manner is conducted into the melt-down gasifier (2).

2. Process according to claim 1, characterised by further adding the prepared top gas as cooling gas to the gas produced in the melt-down gasifier (2) and channelled into the reduction shaft furnace (1).

3. Process according to claim 1 and 2, characterised by recycling a total of 50 to 95 %, preferably 85 % of the top gas of the reduction shaft furnace (1), for producing reducing gas.

4. Process according to one of claims 1 to 3, characterised by using low-grade coke or brown coal high-temperature coke as the carbon carrier.

5. Process according to one of claims 1 to 4, characterised in that enough surplus gas (export gas) is produced to enable the compressors of the $O_2$ plant to be operated and/or steam for the $CO_2$ scrubbing unit to be generated.

6. Process according to one of claims 1 to 5, characterised by introducing the prepared top gas into the melt-down gasifier (2) via the $O_2$ tuyere level.

7. Process according to one of claims 1 to 5, characterised by constructing a fluidised bed in the melt-down gasifier (2) and recycling the prepared top gas into the melt-down gasifier (2) around halfway up the fluidised bed.

8. Process according to one of claims 1 to 7, characterised by conducting the prepared top gas into the melt-down gasifier (2) via plasma torches.

9. Process according to one of claims 1 to 8, characterised by prewarming the prepared top gas to 300 to 600°C, preferably 400°C, by means of a heat exchanger, prior to introducing it into the melt-down gasifier (2).

**Revendications**

1. Procédé de production de fonte, par réduction de minerai de fer dans un four de réduction à cuve, l'éponge de fer ainsi obtenue étant alors traitée par fusion dans un gazéificateur de fusion dans lequel on introduit des matières carbonées ainsi qu'un courant de gaz réducteur, et le gaz ainsi produit dans le gazéificateur de fusion étant envoyé ensuite dans le four de réduction à cuve pour y servir de gaz de réduction, caractérisé en ce qu'on traite le gaz de haut-fourneau provenant du four de réduction à cuve (1), pour le débarrasser au moins en partie de ses composants oxydés constitués par du $CO_2$ et de l'eau $H_2O$, et en ce qu'on introduit dans le gazéificateur de fusion (2) le gaz de haut-fourneau ainsi traité.

2. Procédé selon la revendication 1, caractérisé en ce qu'on ajoute ensuite le gaz de haut-fourneau traité au courant gazeux provenant du gazéificateur de fusion (2) et destiné au four de réduction à cuve (1) pour refroidir ce courant gazeux.

3. Procédé selon l'une des revendications 1 et 2, caractérisé en ce qu'on renvoie au four de réduction à cuve (1) une proportion de 50 à 95 % du gaz de haut-fourneau provenant de ce four de réduction, cette proportion étant de préférence égale à 85 %, pour assurer la production de gaz de réduction.

4. Procédé selon l'une des revendications 1 à 3, caractérisé en ce qu'on utilise comme matières carbonées d'apport du coke de qualité inférieure ou du coke de lignite obtenu à haute température.

5. Procédé selon l'une des revendications 1 à 4, caractérisé en ce qu'on produit une quantité de gaz excédentaire (vendable à l'extérieur) suffisante pour assurer l'entraînement des compresseurs de la station de production d'oxygène $O_2$ et/ou la production de vapeur pour l'appareil de lavage de $CO_2$.

6. Procédé selon l'une des revendications 1 à 5, caractérisé en ce qu on introduit dans l'appareil gazéïficateur de fusion (2) le gaz de haut-fourneau traité, en faisant pénétrer ce gaz dans l'appareil au voisinage du plan ou sont disposées les tuyères d'injection d'oxygène $O_2$ de cet appareil.

7. Procédé selon l'une des revendications 1 à 5, caractérisé en ce qu'on dispose un lit fluidisé dans l'appareil gazéïficateur de fusion (2) et en ce qu'on introduit dans cet appareil le courant de retour du gaz de haut-fourneau préparé, en le faisant pénétrer dans l'appareil à mi-hauteur de la couche qui constitue le lit fluidisé.

8. Procédé selon l'une des revendications 1 à 7, caractérisé en ce qu'on introduit dans l'appareil gazéïficateur de fusion (2) le gaz de haut-fourneau préparé, en faisant passer ce gaz à travers un brûleur à plasma.

9. Procédé selon l'une des revendications 1 à 8, caractérisé en ce qu'on réchauffe le gaz de haut-fourneau préparé, avant d'introduire ce gaz dans l'appareil gazéïficateur de fusion, ce réchauffage étant effectué au moyen d'un échangeur thermique, et permettant de porter ce gaz à une température comprise entre 300° et 600°C, cette température étant de préférence égale à 400°C.